# EUROPEAN PATENT APPLICATION

(11) **EP 4 234 501 A1**
(43) Date of publication of application: **30.08.2023**
(21) Application number: 21883391.1
(22) Date of filing: 30.11.2021
(51) Int. Cl.: C02F 9/02, C02F 9/08, B01D 1/00, B01D 9/02

(54) **METHOD FOR PRODUCING DRINKING WATER FROM SEAWATER AND DEVICE FOR CARRYING OUT SAME**

(30) Priority: 20.10.2020 RU 2020134436
(71) Applicant: Potapov, Oleg Arkad'Evich, G. Tula, 300026 (RU); Fedotov, Aleksandr Nikolaevich, Moscow, 117216 (RU)
(72) Inventor: Potapov, Oleg Arkad'Evich, G. Tula, 300026 (RU); Fedotov, Aleksandr Nikolaevich, Moscow, 117216 (RU)
(74) Representative: Jeck, Jonathan
(86) International application number: PCT/RU2021/000527
(87) International publication number: WO 2022/086369

(57) **Abstract**

A method for producing drinking water from seawater includes purifying seawater of impurities, separating the flow of water by evaporation into a condensate and brine, compressing the vapour, and carrying out crystallization, with the crystals being separated off by filtration. Evaporation is carried out until the concentration of sodium chloride reaches supersaturation and the sodium chloride crystallizes. The concentrate is then mixed with the condensate. A device for producing drinking water from seawater comprises a unit for filtering solid impurities, a pump, an evaporator, a condenser having a condensate pipe, a vapour compressor connected to the evaporator by an inlet, a crystallizer, and a source of vapour. The evaporator and the condenser have a common heat exchange surface which is provided with a distributing device. The vapour compressor is provided with a jet for feeding water into the vapour. Disposed at an outlet is a heat exchanger.

## Description

The group of inventions relates to the field of drinking water supply and, in particular, to obtaining drinking water from sea water by deep processing.

The method of seawater desalination, given in the description of the desalination plant reverse osmosis variants [Description of the invention to the international application PCT WO2011090399 dated 26.03.2010, IPC B01D 61/08, C02F 1/44, published 28.07.2011], which includes sea water filtration to remove solid particles of the feed seawater, and the separation of the seawater flow into desalinized and concentrated brine by the reverse osmosis process on a reverse osmosis membrane.

The disadvantage of this method is the presence after its application of not only clean water, but also concentrated brine (bittern), the utilization of which leads to disposal of the brine and brine solution causes pollution of the environment. In addition, the pure water obtained is completely desalinated and unsuitable for use as drinking water. In addition, due to the peculiarities of operation of reverse osmosis units, thermal pollution of the environment occurs due to the high temperature of the brine. Also the method of desalination of seawater disclosed in the desalination unit is known [Description of useful model to the patent of the Russian Federation Nº 81720 of 16.12.2008, IPC C02F 1/04, publ. 27.03.2009 Bulletin Nº 9], which includes purification of seawater from insoluble impurities, separation of seawater flow by evaporation to condensate and concentrated brine, compression of vapor, crystallization with obtaining crystals with their extraction by filtration. In the installation this process is realized in the following way: a pump through a filter feeds seawater into an evaporator, where it is heated by superheated steam barbotage and thickening by evaporation. The boiled down brine is then sent to a crystallizer-sprayer, where water evaporates from the droplet surface under the influence of superheated steam before crystallization of the salts contained in the droplets. Steam from the crystallizer is directed to the evaporator barboter, after which the evaporator vapor is divided into two streams - one after compression and heating is directed to the barboter, and the other to the condenser, where desalinated water in the form of condensate is formed.

The water resulting from steam condensation in the condenser is completely desalinated and not suitable for use as drinking water. In addition, salt crystallization by evaporation of water from the surface of the droplets leads to a mixture of salts in the crystals that make up the sea salt, which leads to the need to utilize concentrated sea salt brine and discharge it into special storage tanks or back into the sea, which has a negative impact on the ecological situation of the natural environment due to the high salt content and high brine temperature.

The problem to be solved by the first invention of the group and the technical result to be achieved consist in obtaining potable quality water from sea water and reducing the impact on the environment due to its deep processing, eliminating the need for independent disposal of concentrated hot brines.

To solve the task and achieve the claimed technical result in the first invention of the group - a method for obtaining drinking water from sea, - including purification of seawater from insoluble impurities, separation of the seawater stream by evaporation into condensate and concentrated brine, vapor compression, crystallization to obtain crystals with their separation by filtration, evaporation of seawater is carried out to the concentration of supersaturation of sodium chloride with crystallization of sodium chloride and separation of its crystals from the concentrate obtained during crystallization by filtration, and released from the crystals of chloride the sodium concentrate is mixed with condensate, while the vapor is compressed with its humidification to the saturation state, and evaporation is carried out by transferring the heat of condensation of compressed and moistened vapor to seawater through the heat exchange surface.

Apart from that:
- compression is performed with the entire amount of vapor;
- seawater is heated by exchanging heat with the condensate before evaporation;
- the concentrated brine is filtered before crystallization;
- crystallization of sodium chloride is carried out until any of the accompanying soluble salts in seawater are saturated.

A reverse osmosis desalination module (two versions) including a unit for filtration of mechanical impurities in the sea water, a hydraulic drive and a reverse osmosis membrane is known [Description of the invention to the international application PCT WO2011090399 of March 26, 2010, IPC B01D 61/08, C02F 1/44, Publ. 28.07.2011]. The invention solves the problem of autonomy and compactness of the desalination module, as well as increasing its maintainability and reliability.

The disadvantage of the desalination module is that when the reverse osmosis membrane operates, not only pure water but also concentrated brine (bittern) is present at its outlet, the disposal of which leads to pollution of the natural environment with salts and heat contained in the brine. In addition, the pure water obtained is completely desalinated and unusable as drinking water.

The desalination unit is known to include a filtering unit for filtration of mechanical impurities of the feed sea water, a pump and an evaporator connected in series as a barbotage chamber, a condenser connected to the evaporator with a condensate line, a steam compressor and a crystallizer connected to the evaporator with their input, the output of which is connected to the filtering device, a steam source and other elements [Description of the useful model to the Russian patent Nº 81720 from 16.12.2008, IPC C02F 1/04, Publ. 27.03.2009 Bulletin Nº 9]. The useful model solves the problem of obtaining distillate with a simple and reliable in operation device. It is declared that there is no back discharge into the surrounding aquatic environment of solutions with increased salinity and temperature and reduction of heat emissions into the natural environment.

The present unit has low efficiency, because the steam sent to the barboter after mechanical compression and heating does not change the dew point, because during heating and compression it becomes superheated and its enthalpy increases insignificantly. The steam from the crystallizer also does not have a sufficiently high enthalpy, so the amount of water evaporated in the evaporator is slightly higher than the amount of water obtained from the condensation of the steam coming from the barboter. As a result, an amount of condensate will be generated in the condenser that is slightly higher or approximately equal to the amount of superheated steam from the superheater. At the same time, water obtained as a result of steam condensation is completely desalinated and is not suitable for use as drinking water. In addition, salt crystallization by evaporation of water from the surface of the droplets results in a mixture of all salts characteristic of sea water in the crystals, which does not reduce the concentration of sodium chloride in the brine and does not make it suitable for mineralization of condensate to the properties of drinking water. In the crystallizer it is not possible to carry out the process of crystallization of sodium chloride until the state of saturation of the rest, in addition to sodium chloride, of the salts contained in the seawater. In addition, the processes of evaporation and crystallization result in the accumulation of crystals of hard-to-solve salts (gypsum and calcium carbonates). This, as mentioned above in the text, leads to the need to dispose of concentrated sea salt brine and discharge it into special reservoirs or back into the sea. The high salt content and high temperature of the brine have a negative impact on the natural environment.

The problem to be solved by the second invention of the group and the technical result to be achieved also consist in obtaining potable quality water from sea water and reducing the impact on the environment by means of its deep processing, eliminating the need for independent disposal of concentrated hot brines.

To solve the task and achieve the claimed technical result in the second invention of the group - a device for obtaining drinking water from the sea, - comprising a filtration unit for mechanical impurities of the supplied seawater, a pump and evaporator connected to it in series, a condenser with a condensate line, a steam compressor connected to the evaporator by its inlet and a crystallizer whose outlet is connected to a filtering device, and a steam source, the evaporator and the condenser have a common heat exchange surface equipped with a switchgear for seawater from the evaporator, and the steam compressor is installed with its outlet at the inlet to the condenser and is equipped with a water supply nozzle to steam, and a heat exchanger is placed at the outlet of the solid particles filtration unit, while the crystallizer is equipped with a heat exchange surface, the heating side of which communicates with the steam source, and the filtering device is designed to filter out the salt concentrate, while the condensate line after its exit from the heat exchanger is equipped with a mixer connected to the concentrate outlet of the filtering device.

Apart from that:
- the heat exchanger communicates on its heating side with the condensate line on the condenser side;
- the filtering device is made in the form of a centrifuge;
- a filter is installed between the evaporator and the crystallizer;
- the water nozzle of the steam compressor communicates with the condensate line before it enters the heat exchanger;
- steam source is designed as a steam compressor with its own water feed nozzle, and the compressor inlet is connected to the crystallizer volume on the supply side of concentrated sea salt solution, and the water feed nozzle and the crystallizer volume on the steam supply side communicate with the condensate line to its entrance into the heat exchanger.

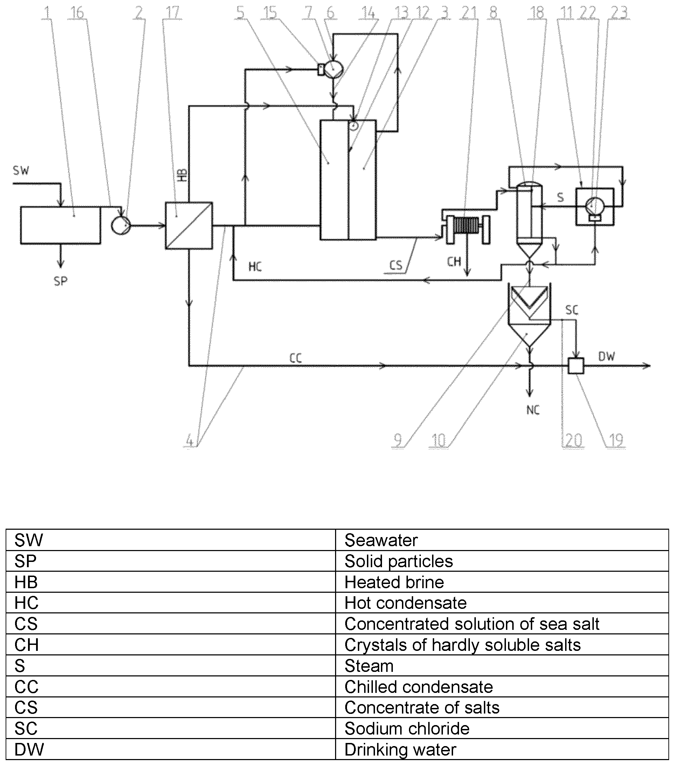

The group of inventions is illustrated by the drawing, which schematically shows a method of obtaining drinking water from seawater by an example of the operation of the corresponding device.

It is known that seawater has a specific chemical composition given in Table 1 (http://ctcmetar.ru/metallurgiya-magniya/8391-prirodnye-rastvory-magnievyhsoley.html).

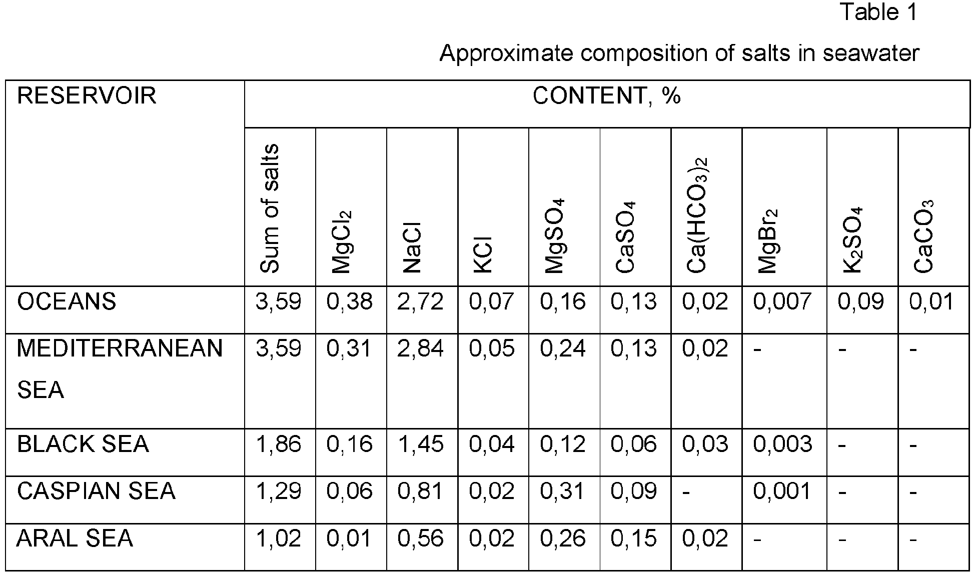

Human blood has a similar composition. Table 2 shows the ratios of chemical elements contained in the average seawater and human blood plasma in terms of dry matter, % (https://present5.com/presentation/38356841_437427902/ image-15.jpg).

**Table 2**

| Approximate composition of human blood plasma | | |
|---|---|---|
| Chemical elements and compounds | Seawater | Blood |
| Na | 30,5 | 39 |
| Mg | 3,8 | 0,5 |
| K | 1,2 | 1 |
| Ca | 1,8 | 2,6 |
| Cl | 55,2 | 45,0 |
| CO₂ | 0,5 | 11 |
| Other elements | 7 | 0,9 |
| Total | 100% | 100% |

A comparison of the tables allows us to conclude that only the excessive concentration of some elements, particularly sodium salts, does not allow it to be consumed as drinking water, because the human metabolism is not able to accept without harm to the high concentration of sodium chloride without harm. For example, people who were shipwrecked in the ocean and drank seawater quickly died. In the same way, distilled water is not suitable for consumption, which leads to desalination of the body, which must be "salted" before use, and the process of salting (mineralization) is often reduced to the predominant addition of sodium chloride together with sea salt. The permissible (1000 mg/l) and optimal (around 400 mg/l) concentration of mineral salts in drinking water is known. At the same time, if salting with seawater, the most valuable salts will enter the water in minimal amounts and sodium chloride will be in unnecessary excess.

But the most valuable thing in seawater is a set of trace elements. Seawater contains the entire periodic table in insignificant concentrations. If excess sodium chloride is removed from seawater, all trace elements remain in it.

The necessity for the human body of the whole range of chemical elements is undeniable, man during all his existence on earth has lived and used these trace elements, although their full impact on the metabolism of science has not been studied.

Attempts are being made to artificially mineralize desalinated water, but it is obvious that the variety of chemical elements, including rare-earth elements, in seawater cannot be artificially recreated in an economically achievable economically achievable artificially cannot be recreated. Therefore, complete artificial mineralization of distilled water to drinking water properties is not possible.

Method for obtaining drinking water from seawater includes cleaning seawater from insoluble mechanical impurities, separation of seawater flow by evaporation into condensate (distilled water) and concentrated brine with a predominance of sodium chloride, compression of the vapor, crystallization with obtaining sodium chloride crystals with their separation by filtration, where sea water is evaporated to sodium chloride supersaturation concentration with sodium chloride crystallization and separation of its crystals from the concentrate obtained during crystallization by filtration, The concentrate free from sodium chloride crystals, being salts essential for the organism, is mixed with condensate to produce usable and useful drinking water where the steam is compressed and moistened to saturated state and the evaporation is carried out by transferring the heat of condensed water through the heat exchange surface condensation heat of the compressed and wetted vapor.

To further improve the performance of the present method, compression is performed, although not necessarily with the entire amount of vapor, whereby the seawater is heated by exchanging heat with the condensate before evaporation, the concentrated brine is filtered before crystallization to separate from it a small amount of crystals of hard-to-solve salts, and sodium chloride is crystallized until any of its accompanying in seawater is saturated soluble salts.

The present method is implemented on the corresponding device for obtaining potable water from sea water, which includes a unit for filtration of mechanical impurities 1 of sea water fed, a pump 2 and evaporator 3 connected in series with it, condenser 5 connected with the evaporator 3 with the condensate line 4, steam compressor 7 and crystallizer 8 connected with the evaporator 3 by its input 6, output 9 of which is connected with a filtering device 10, and a steam source 11. The evaporator 3 and the condenser 5 have a common heat exchange surface 12 equipped with a distribution device 13 for sea water on the side of the evaporator 3, and the steam compressor 7 is set at the inlet 14 to the condenser 5 and is equipped with a nozzle 15 for water (hot condensate) in steam, and the heat exchanger 17 is located at the outlet 16 of the mechanical impurities filtering unit 1 The crystallizer 8 is equipped with a heat exchange surface 18 which heating side is communicated with a steam source 11, and a filtering device 10 is designed to filter the salt concentrate, and the condensate line 4 after its outlet from the heat exchanger 17 is equipped with a mixer 19 connected to the outlet 20 of the filtering device 10.

Additionally, the heat exchanger 17 is communicated by its heating side with the condensate line 4, the filtering device 10 is designed, preferably, as a centrifuge, the filter 21 is installed between the evaporator 3 and the crystallizer 8, and the water supply nozzle 15 to the steam compressor 7 is communicated with the condensate line 4, In this case the steam source 11 is designed as a steam compressor 22 with its own water nozzle 23, wherein the inlet of compressor 22 is connected to the volume of the crystallizer 8 from the supply side of the concentrated sea salt solution, and the water nozzle 23 and the volume of the crystallizer 8 from the steam supply side are connected to the condensate line 4 up to its entrance to the heat exchanger 17.

Let us analyze the essential features of the group of inventions.

Evaporation of seawater to supersaturated sodium chloride concentration is carried out to crystallize sodium chloride and to separate from the resulting crystallization concentrate its crystals by mechanical filtration, for example, using centrifuges, mechanical or fabric filters.

It is the mixing of crystal-free sodium chloride concentrate with condensate that produces ready-to-drink drinking water, with the by-product sodium chloride is a marketable and self-sufficient product. marketable product.

Compression of a vapor with its humidification to the saturation state provides increase of its condensation temperature, which provides transfer of condensation heat through heat exchange surface 12 to sea water in evaporator 3, and evaporation is carried out by transfer of sea water through the surface of condensation heat of compressed and wetted vapor, allows repeatedly, as long as the device is in operation, to use the heat of vaporization expended during evaporation, returning it into the evaporation process as heat of heat of condensation.

Compression with the entire amount of vapor allows the evaporation process to be carried out without feeding an additional amount of steam into the process chain. In this case the amount of condensed water (condensate) is equal to the amount of evaporated water.

Heating of seawater before evaporation by exchange of heat with condensate makes it possible to heat seawater to boiling temperature without additional heat consumption, while cooling the condensate, which makes it possible to supply it after mineralization into the drinking water supply network. Differences in boiling and condensation temperatures (due to compression and vapor wetting) ensure compensation of heat losses and sufficient temperature difference on the heat exchange surface in heat exchanger 17.

Filtration of concentrated brine before crystallization is an optional technological operation, but it allows to exclude the ingress of turbidity (microcrystals of gypsum and calcium carbonates) into drinking water.

The process of crystallization of sodium chloride should be carried out until any of its accompanying soluble salts in seawater are saturated. This cuts off the inclusion of additional ballast impurities in the composition of "pure" sodium chloride, characteristic of common table salt. The remaining sodium chloride in the concentrate after adding the entire concentrate to the condensate is approximately 17 mg/l in the resulting drinking water, which does not deteriorate, but further improves consumer properties of drinking water.

It should be noted that other by-products obtained as a result of the implementation of the method, namely mechanical impurities and hard-to-solve salts after their classification can be successfully used in the construction industry.

The listed features of the method of obtaining drinking water from seawater are provided by the appropriate device and, accordingly, its elements. For example, the total heat exchange surface of the evaporator 3 and condenser 5, equipped with a distribution device 13 (e.g., a pipe with perforated walls) for sea water on the side of the evaporator 3 provides the possibility of transferring the vapor condensation heat to sea water. Availability of a steam compressor 7 at the inlet to the condenser 5 and supplying compressor 7 with a nozzle 15 of water supply to steam allows increasing the vapor potential, i.e. increasing its condensation temperature, which provides a temperature difference at the heat exchange surface 12 and, accordingly, transfer of condensation heat from condensate to sea water, i.e. provides the process evaporation without introducing additional heat into the process. Placing the heat exchanger 17 at the outlet 16 (immediately after the pump 2) of the mechanical impurities filtration unit 1 allows utilizing the heat contained in the condensate, lowering its temperature and eliminating the costs of heating the seawater delivered for seawater coming for processing. In turn, the crystallizer 8 is equipped with its own heat exchange surface 18, the heating side of which communicates with the steam source 11. It is due to this that sodium chloride is released by crystallization from the concentrate solution as a technological waste in the process of potable water production and, at the same time, as an independent commercial product. The sodium chloride crystallization process to the state of saturation of any of its accompanying soluble salts in seawater is monitored by devices that determine the density of solutions, such as polarimeters, water content meters based on capacitive sensors, absorption of radio waves of certain frequencies, laboratory methods, etc.

The concentrate solution to remove sodium chloride from it passes the filtering device 10, which in addition to the centrifuge may also be cyclones, mechanical or fabric filters, and other devices. The result is a concentrate containing refined impurities typical of quality drinking water. Thus, mixing the concentrate with the cooled condensate makes it possible to obtain ready-to-drink drinking water. It should be noted that the process of obtaining concentrate and cooled condensate, and their mixing is continuous, which excludes the possibility of artificial increase of salts in drinking water. In other words, solid particles, insoluble salts and excessive sodium chloride are removed from seawater. The output is drinking quality water with unique properties that are not characteristic of the technology. not typical of other technologies for its production.

Implementation of a steam source 11 in the form of a steam compressor 22 with its own water nozzle 23, where the input of compressor 22 is connected with the volume of the crystallizer 8 on the supply side of the concentrated sea salt solution, and the water nozzle 23 and the volume of the crystallizer 8 on the supply side of steam reported with the condensate line 4 to its entrance to the heat exchanger 17 allows for crystallization of the moisture with minimal energy costs, eliminating its thermal impact on the natural environment, while virtually all the moisture contained in seawater is converted into drinking water.

The remaining features of the device also provide the implementation of the corresponding essential features of the method.

Specific implementation of the method of obtaining potable water from seawater let's consider an example of how the device works.

### Example:

Seawater enters the mechanical filtration unit 1 of the seawater inlet, where it is freed from solid particles: sand, silt, remains of sea creatures. Then the treated sea water is pumped by pump 2 to heat exchanger 17, where it is heated by condensate from condenser 5 and hot water is sent through distributor 13 to heat exchange surface 12 in evaporator 3, where the moisture contained in sea water is evaporated, resulting in sodium chloride concentration is brought to saturation state. The resulting steam is removed from the evaporator 3 by the steam compressor 7, it is mechanically compressed and moistened with hot condensate by the nozzle 15 up to saturation state. As a result, the potential of steam supplied by the steam compressor 7 to the condenser 5 increases. The potential difference of compressed steam and steam in the evaporator 3 is enough to provide transfer of heat of vaporization through heat exchange surface 12 from condenser 5 to evaporator 3. As a result, on the heat exchange surface 12 on the side of condenser 5 there is condensation of steam, and on the side of evaporator 3 there is evaporation of moisture from seawater, with equal amount of moisture evaporated from seawater per kilogram of condensate. The losses are compensated by introducing an additional amount of water by nozzle 15. Thus, there is a multiple use of the heat of vaporization without its losses.

The condensate in condenser 5 drains to its lower part and enters the condensate line 4. The present liquid is desalinated (distilled) water. Hot distilled water from condenser 5 via condensate line 4 is sent to heat exchanger 17, where it gives its heat to filtered seawater, which is heated and sent to evaporator 3.

The sea salt solution concentrated to the saturation state of sodium chloride, formed as a result of evaporation of moisture from seawater in the evaporator 3, is filtered on the filter 21 in order to remove from it a suspension of crystals of insoluble salts (gypsum, carbonates) formed during heating and evaporation of seawater, and is sent to the crystallizer 8, in which additional evaporation occurs water from a concentrated sea salt solution by transferring heat from the heat carrier through the heat exchange surface 18 to form a supersaturated sodium chloride solution, in which crystals of sodium chloride are formed. The crystallization process is carried out until the state of saturation of any of the other soluble salts of the solution. Similarly to evaporator 3 with condenser 5 moisture evaporation occurs in crystallizer 8. The vapor from crystallization is mechanically compressed by steam compressor 22, wetted by water from nozzle 23 and directed to heat exchange surface 18, where it condenses, transferring heat to heat exchange surface 18, which, in turn, transfers this heat to the concentrate, causing it to boil. Condensate from the heat exchange surface 18 of the crystallizer 8 flows into the condensate line 4. Condensate from the condensate line 4 is fed to the nozzle 23, at that, as mentioned above, the mechanically compressed steam from crystallization is brought to the saturation state, which increases its condensation temperature. It should be noted that in all cases only a small part of the hot condensate is supplied to nozzles 15 and 23, and its main part in the cooled form goes to the mixer 19.

The mixture of sodium chloride crystals and intercrystalline liquid (massecuite) is sent to a filtering device 10, preferably a centrifuge, in which the sodium chloride crystals are separated from intercrystalline liquid.

Intercrystalline liquid, a concentrate, is a concentrated solution of salts useful to the human body in their natural ratio. This solution is sent to the mixer 19, where it is introduced into the cooled condensate in order to mineralize it, resulting in ready-to-drink drinking water.

Approximate, but far from complete chemical composition of the obtained water for the case of deep processing of the Black Sea water is shown in Table 3.

**Table 3**

| Approximate chemical composition of drinking water obtained from the Black Sea,%% | | | | | | | | |
|---|---|---|---|---|---|---|---|---|
| Mg | S | Ca | K | Br | Na | Li | Be | Zn |
| 0,12 | 0,091 | 0,04 | 0,04 | 0,0067 | 0,17 | 0,000018 | 6×10⁻¹¹ | 2×10⁻⁷ |

After the condensate is remineralized with seawater salt concentrate, the drinking water, which is practically devoid of sodium chloride, contains most of the of periodic system of chemical elements.

Ocean water and water from other seas are treated in a similar way, and in all cases drinking quality water is obtained, with some differences in its overall salinity.

As a result of using the inventions through deep processing of seawater, drinking quality water was obtained and the impact on the environment was reduced, eliminating the need for independent disposal of concentrated hot brines.

## Claims

1. Method for obtaining drinking water from seawater, which includes cleaning seawater from insoluble impurities, separation of seawater flow by evaporation into condensate and concentrated brine, compression of the vapor, crystallization with obtaining crystals with their separation by filtration, which differs in that, That sea water evaporation is carried out to sodium chloride supersaturation concentration with sodium chloride crystallization and separation of its crystals from the obtained during crystallization concentrate by filtration, and the concentrate freed from sodium chloride crystals is mixed with condensate, the evaporation is carried out with its moistening to saturation state, and evaporation is performed by transferring sea water through the heat exchange surface the condensation heat of the compressed and wetted vapor.

2. Method according to claim 1,
**characterized in that** compression is carried out with the whole amount of vapor.

3. Method according to claim 1,
**characterized in that** the seawater before evaporation is heated by exchange of heat with the condensate.

4. Method according to clause 1,
**characterized in that** the concentrated brine is filtered before crystallization is filtered.

5. The method according to claim 1,
**characterized in that** crystallization of sodium chloride is carried out to the state of saturation of any of its accompanying soluble salts.

6. A device for obtaining drinking water from the sea according to claims 1-5, comprising a filtration unit for mechanical impurities of the supplied seawater, a pump and evaporator connected to it in series, a condenser with a condensate line, a steam compressor connected to the evaporator by its inlet, and a crystallizer whose output is connected to a filtering device, and a steam source, **characterized in that** the evaporator and condenser have a common heat exchange surface equipped with a distribution device for seawater on the evaporator side, and a steam compressor is installed with its outlet at the inlet to the condenser and is equipped with a water supply nozzle to steam, and a heat exchanger is placed at the outlet of the mechanical impurities filtration unit, while the crystallizer is equipped with a heat exchange surface, the heating side of which communicates with the steam source, and the filtering device is designed to filter out the salt concentrate, while the condensate line after its exit from the heat exchanger is equipped with a mixer connected to the concentrate outlet of the filtering device.

7. The device according to clause 6,
**characterized by** the fact that the heat exchanger is connected by its heating side with the condensate line on the condenser side.

8. The device according to claim 6,
**characterized in that** the filtering device is made In the form of a centrifuge.

9. The device according to claim 6,
**characterized in that** between the evaporator and the crystallizer between the crystallizer and the crystallizer, a filter is installed.

10. Device according to clause 6,
**characterized in that** the water nozzle of the steam compressor is communicated with the condensate line before it enters the heat exchanger.

11. The device according to claim 6,
**characterized in that** the steam source is made in the form of a steam compressor with its own water nozzle, wherein the compressor input is connected to the crystallizer volume on the supply side of the concentrated sea salt solution, and the water nozzle and the crystallizer volume on the steam supply side are communicated with the condensate line to its entrance into the heat exchanger.
